# EUROPEAN PATENT SPECIFICATION

(11) **EP 1 223 817 B1**
(45) Date of publication and mention of the grant of the patent: **30.03.2005**
(21) Application number: 01960196.2
(22) Date of filing: 20.08.2001
(51) Int. Cl.: A23K 1/00, A23K 1/16, A23K 1/18, A23P 1/12

(54) **METHOD OF MAKING ENCAPSULATED ANIMAL FEEDING-STUFFS**
VERFAHREN ZUR HERSTELLUNG VON EINGEKAPSELTEN TIERFUTTERMITTELN
PROCEDE DE FABRICATION D'ALIMENTS POUR BETAIL ENCAPSULES

(30) Priority: 23.08.2000 DK 200001245
(43) Date of publication of application: 24.07.2002
(73) Proprietor: Edberg, Susanne, 6000 Kolding (DK)
(72) Inventor: Edberg, Dan Oudal, 6000 Kolding (DK)
(74) Representative: Nielsen, Leif
(86) International application number: PCT/DK2001/000546
(87) International publication number: WO 2002/019838

(56) References cited:
- WO-A1-99/47000
- US-A- 4 777 058
- US-A- 5 449 281
- US-A- 5 695 797

## Description

The invention concerns a procedure for production of an animal feed encapsulated in a digestible shell, which procedure comprises the steps of:
a) feeding a core product through a feeder screw into a compressing screw; deaerating the core product in the compressing screw and pressing it through a joint die; shaping the core product into the desired shape;
b) feeding a shell material through a feeder screw into an extruder-cooker and extruder-cooking the shell product; pressing the extruder-cooked shell product into the joint die; shaping the extruder-cooked shell product around the core product.
c) cutting the feed bar consisting of the core product surrounded by the extruder-cooked shell into feed blocks of suitable length by using a cutter, and simultaneously closing the ends of the feed blocks with shell product;
characterized in that the core product is an unheated mealy feed mixture amounting to between 70% and 95% of the total animal feed.

Comparing the present procedure to the pelleting process used today (production of feed pellets for cattle, pigs, poultry and other animals), an energy reduction from 79 kWh/ton to 29 kWh/ton is achieved giving energy savings of approx. 63% and CO₂ reduction of approx. 41%, and the advantages of the pelleting process are still maintained.

The procedure consists in the introduction of an unheated mealy core product through a feeder screw to a compressing screw in which the core product is deaerated and thus gets higher density. From the compressing screw, the product is led to a joint die in which a core die part forms the shape of the core product.

The shell product is led through a feeder screw to an extruder-cooker, in which the shell product is cooked and fed to the joint die where a shell die part forms the shape of the shell product around the core product.

From the joint die, the shelled feed is led to a cutter cutting the feed blocks to the desired length and closing the ends of the feed blocks. From the cutter the feed blocks are led to a stamping roller where producer name, product name, lot No., production date and other product related information are burned or printed on the surfaces of the feed blocks.

The finished feed blocks are then led to palletizing.

### STAGE OF TECHNOLOGY:

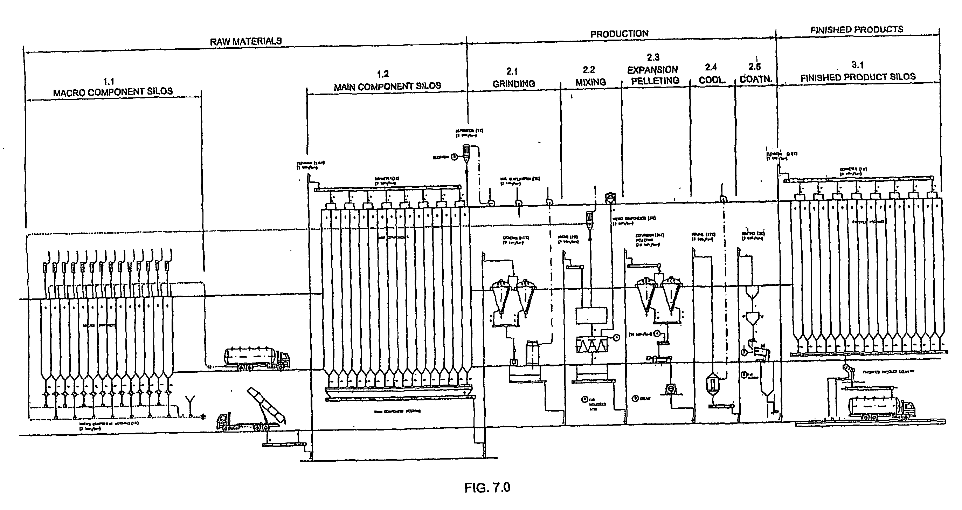

Fig. 7.0 is showing a functional diagram of a typical feed mill for production of pelleted feed for pigs, cattle and poultry.

The plant consists of the following main components:
*Raw materials:*
   Main constituent raw material silos (1.2)
   Macro constituent raw material silos (1.1)
   Micro constituent raw material storage/silos
   Weighing
*Production:*
   Grinding (2.1)
   Mixing (2.2)
   Expansion and pelleting (2.3)
   Cooling (2.4)
   Coating (2.5)
*Finished products:*
   Finished products silos (3.1)
   Weighing

### Production progress:

Raw materials are weighed in charges and ground (2.1), often on 3mm perforated screens, partly to promote feed digestibility and partly to allow pelleting.

The ground charge is mixed (2.2) and liquid constituents may be added.

When mixing of the charge is finished, the feed is expanded and pelleted (2.3), i.e. the feed is mixed with steam in a pre-conditioner to increase the meal temperature from approximately room temperature to approx. 60° C, which is necessary to accomplish pelleting.

To increase the temperature further to combat salmonella, the product is led through an expander in which the product through a combination of friction and steam addition is heated from approx. 60° C to approx. 82° C. From the expander the product is led to a pellet mill, in which the product is formed to pellets, often with a diameter of Ø3mm and approx. 15mm long.

From the pellet mill, the hot and moist pellets are led to a cooler (2.4), where the pellets are cooled to approx. 4° C above outdoor temperature and the moisture content is reduced to approx. 14%.

From the pellet cooler the product is led to a coater (2.5) where e.g. approx. 2% fat can be added, and after time for absorption the finished pellets are conveyed to a finished products storage. The coater system is necessary because too large fat addition before pelleting makes production of firm pellets impossible.

The feed pellets are transported in tank trucks from the feed mill to the farmers and are blown from the tank truck to the farmer's storage silo, from where the farmer's feed system draws the feed.

Industrially produced feed is pelleted for the following reasons:
All the mixed feed constituents do not segregate before reaching the animals.
Feed pressed into pellets has higher density than unpelleted feed and thus requires less transport.
Feed formed to pellets is easier to handle in silos and feeding systems.

In production of pet food and fish feed expansion/pelleting has been replaced by extrusion/cooking during the last 20 years to enhance digestibility and allow addition of more fat/oil to the feed and to control the feed density.

Extrusion/cooking is done by adding large quantities of steam and besides the cooler it is therefore necessary to install a dryer to remove the large quantity of moisture added with the steam. The energy consumption for extruded feed is at least 6 to 7 times as high as in the pelleting process, i.e. in the area of 600 kWh/ton.

The production of extruded feed is such an energy consuming process that the process for economical reasons cannot be used for production of cattle, pig and poultry feed, but merely for production of pet food and fish feed.

Today there are extruder-cooker applications for pet food where a shell product is extruder-cooked and a core product is extruder- cooked to produce a more exciting product, perhaps in two different colors.

Within the feed industry, there are today extruder-cooker applications where a shell product is extruder-cooked around a pasty core product.

WO publication paper No. WO 99/47000 describes a multi-component animal feed (dog and cat food) consisting of a first component (the core product) which is fatty and another component (the shell product) surrounding the first component.

The feed gives enhanced flavor acceptance. The procedure for production of the multi-component feed is based on the production processes known today. Today there are two procedures for production of animal feed with a core product and a shell product.

### First Procedure:

From a feed a feed pipe (the shell product) is extruder-cooked, into which a pasty (heated) feed (the core product) is pumped simultaneously with the extrusion. The filled feed pipe is cut to desired lengths and with different end seals preventing the core product from flowing out. This procedure is mostly used when high fat content is wanted. The finished product becomes a feed with a hard shell surrounding a soft centre, in principle like filled chocolate. This technology has been known for many years.

### Second Procedure:

A feed pipe (the shell product) is extruder-cooked from a feed, into which another extruder-cooked feed (the core product) is pumped simultaneously with the extrusion. The filled feed pipe is cut to desired lengths without end seals. The finished fed becomes a feed with a hard shell surrounding a hard core, where the shell product and the core product has the same structure, but may have different feed compositions, colours and sales parameters.

Common for both procedures with today's technology is that the core product has to be pasty and not mealy to be pumped into the feed pipe (the shell product). Common for both procedures with today's technology is that the weight of the shell product shall be around 50% and 95% of the feed to form a durable shell. An extruded shell below 2-3mm is not realistic. The shell quantity is based on the fact that normal animal feed does not have dimensions above 30x30x30mm. Common for both procedures with today's technology is that relatively much production energy is required, approx. 3 times as much as the pelleting process, naturally most when both shell and core are to be extruder-cooked.

The extruder-cooking technology requires both cooking, drying and cooling. Common for both procedures with today's technology is that the production capacity is very low compared to the production of pig and cattle feed, and consequently the extruder-cooking process known today will never be used for production of pig, cattle and poultry feed for capacity/economical reasons.

### THE SPECIAL EFFECT GAINED COMPARED TO THE STAGE OF TECHNOLOGY:

It has been the objective of the invention to find an alternative production process for production of finished feed for pigs, cattle and poultry which meets the requirements there are to a finished product today and which solves the production problems given by the known pelleting process. There are especially wishes for a considerable reduction of the energy consumption to reduce CO₂ discharge in that way.

According to the present invention this objective is obtained through a procedure mentioned by introduction which is peculiar in providing the core product as an unheated mealy feed mixture amounting to between 70% and 95% of the total feed quantity of the animal feed.

In the following the advantages obtained over the prior art technology will be explained by comparison between prior art technology and the technology according to the present invention.

With today's technology there are no feed or procedure to produce feed consisting in a digestible shell with an unheated feed meal mixture as core product forming a feed block larger than 30x30x30mm.

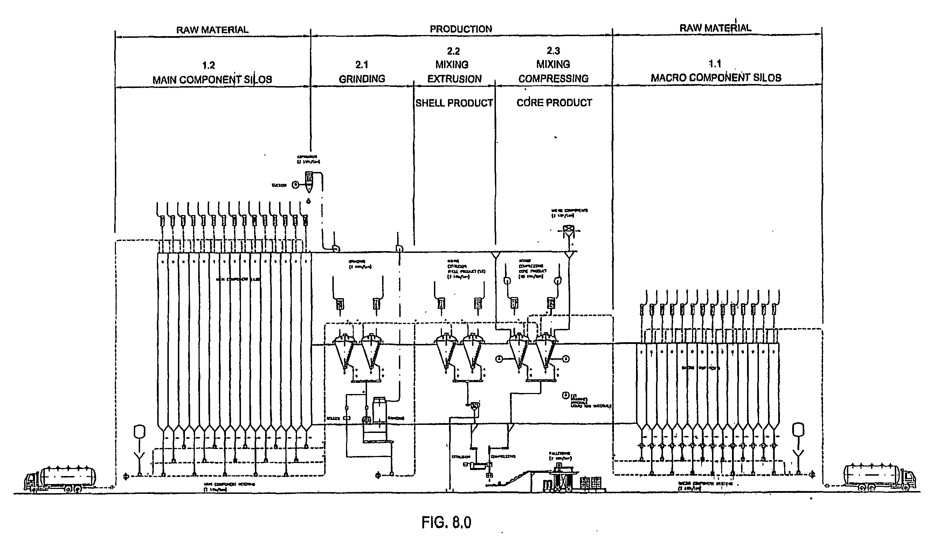

By this invention, a procedure for production of an unheated feed meal mixture encapsulated in digestible shell is provided, which solves the problems of traditional feed production. Fig. 8.0 shows a functional diagram of a typical feed mill for production of feed for pigs, cattle and poultry with the new procedure installed.

The feed mill consists of the following main components:
*Raw materials:*
   Main component raw material silos (1.2)
   Macro component raw material silos (1.1)
   Micro component raw material storage/silos
   Weighing
*Production:*
   Grinding (2.1)
   Mixing/Extrusion of shell product (2.2)
   Mixing/compressing of core product (2.3)
   Palletizing
*Finished products:*
   Pallet storage

### Production progress:

### Shell product:

Raw materials are weighed in charges and are ground (2.1), often on 1 mm perforated screens, partly to enhance the digestibility of the feed and partly to allow extruder-cooking of the shell product.

The ground shell product is mixed and extruder-cooked (2.2), so that the shell product forms the shell of the feed block.

### Core product:

Raw materials are weighed in a charge and ground (2.1), often on 3mm perforated screens to enhance feed digestibility, alternatively the feed can be rolled instead of ground.

The ground core product is mixed and liquid constituents may be added. It is compressed 2.3), so that the core product forms the core of the feed block.

When production of the feed blocks is finished, the feed blocks are led to burning or stamping of product information and further to palletizing.

Pallets of feed blocks are transported by trucks from the feed mill to the farmers and are placed centrally, from where the farmer's feeding system collects the feed.

This new process meets all the reasons why industrially produced feed today is pelleted.

The advantages are as follows:

The mixed feed ingredients are not segregating before reaching the animals.
The feed blocks have higher density than pelleted feed and therefore requires less transport.

Feed formed to blocks is easier to handle and does not have to go into silos, but can be placed in flat stores.

The traditional pelleting feed production has the following main problems:

### Environment:

### Existing procedure:

Many feed mills in Denmark have been ordered by the counties to reduce the smell emission from the process air to 10 LE/m³. As the feed mills use very large process air quantities it has until today not been possible to purchase smell reduction plants, where efficiency, price and space requirements are realistic. Most companies have therefore chosen to thin the process air smell through a chimney. This solution transfers, yet does not remove the smell. Another disadvantage of a chimney is the height that is required for the large air quantities, often around 100m, which may cause architectural and space problems.

### The new procedure:

This procedure does not use any steam addition, the extruder-cooking of the shell product takes place by a combination of the natural moisture of the shell product, mechanical friction and high pressure.

As the shell product only amounts to approx. 5% of the total feed quantity, the temperature increase taking place in the shell product does not require air cooling, and as neither steam nor any other kind of heating of the core product is added the air cooling process is not necessary and consequently no cooling process air is discharged to the surroundings.

As cooling process air is not discharged to the surroundings, large investments for a chimney or any other smell reducing measures are saved and the smell inconveniences of the feed production are solved.

### Bacteriae:

### Existing procedure:

During the last three to four years the salmonella problem has grown at the feed producers, and even though heat treatment equipment worth millions of DKK has been installed, still more salmonella problems are found than with the farmers who mix their own feed.

The heat treatment environment (moist environment) makes it almost impossible to avoid salmonella, because the peripheral areas around heat treatment and the very large pipes installation make the hygiene measures, which are necessary, impossible.

### The new procedure:

As the new procedure does not add steam for heating of the feed and a cooler with long pipe installations does not have to be installed, the new procedure is a "dry" feed production procedure and a simpler production with regard to process technology.

With the new procedure, it is possible to maintain the hygiene necessary to avoid bacteria contamination.

### Nutrition:

### Existing procedure:

The farmers who mix their own feeds have not had the same problems with salmonella, and a debate has started whether some important immune response constituents (nutrients) may be destroyed during heat treatment.

It is well known that large quantities of vitamins are destroyed during heat treatment, this means that vitamins and other nutrients have to be overdosed in industrial feed production.

### The new procedure:

In the new procedure only the shell product is heated, and as the shell product only amounts to approx. 5% of the total feed quantity, approx. 95% of the feed will not be heated exept from the modest heating taking place during compression of the core product. By avoiding heating of the feed, the natural nutrients, vitamins and immune response constituents are preserved.

### Energy:

### Existing procedure:

The entire procedure, in which the feed pellet is formed today, where the meal is heated with steam, the feed is compressed to a pellet by means of friction in a ring die, and then the pellets are cooled and the moisture added with the steam is removed, is a very energy-consuming process.

The Danish Energy Agency has prepared a statement concerning the energy consumption with the feed milling business (H2) from which it appears that the total energy consumption is approx. 79 kWh/t.

### The new procedure:

With the new procedure, steam addition and cooling become unnecessary and the process progress becomes simpler. These circumstances mean that the total energy consumption drops from approx. 79 kWh/ton to approx. 29 kWh/ton and at today's energy prices it means a drop in energy costs from approx. DKK 28/ton to approx. DKK 13/ton.

CO₂ discharge drops from approx. 56 kg CO₂/ton to 33 kg CO₂/ton.

### Raw material composition:

### Existing procedure:

Of course we are always interested in the most wholesome and cheapest feed as the raw material market allows, yet-in traditional feed mills with pellet production we are restrained by the fact that it must be possible to pellet the raw material composition.

Pelleting restrains the fat and molasses content, and many raw materials give too loose pellets resulting in crumbles and segregation problems.

### The new procedure:

With the new procedure the raw material in the core product, which amounts to approx. 95% of the feed substance, is independent of the production process, i.e. all types of raw materials can be used, from almost liquid and pasty to coarsely ground or coarsely rolled feed meal. There are no limitations to the fat and molasses share of the core product

Investigations have been made which show that a certain quantity of coarsely cut straw is favourable to pigs. With the new procedure, straw pieces can be mixed with the core product.

Various liquid additives (acids promoting feed digestibility) can be added, which can react chemically with the core product, while the feed blocks are stored thus extending the reaction time and while encapsulated in the shell.

Additives are often aggressive to the processing equipment and therefore it is desirable that the additives are in the processing plant as short time as possible.

### Finished products:

### Existing procedure:

With the traditional procedure the finished feed is typically feed pellets of cylindrical shape, often between 2 and 15mm diameter, and approx. 15mm long.

The feed pellets normally have a density of approx. 0.6 and a pellet durability giving a crumble share of max. 1-2%. The feed pellets are stored in large finished products silos at the feed mill and in small storage silos at the farmers'.

The farmer conveys the feed pellets from his storage silo to the feeding system.

### The new procedure:

With the new procedure the finished feed is typically feed blocks shaped as rectangular blocks, often with a cross section of approx. 100 x 70mm, and approx. 200mm long. The feed blocks will have a density of approx. 1 and consist of approx. 95% core material and approx. 5% shell material. The feed blocks are palletized and stored in the pallet store at the feed mill and in the farmer- pallet store.

The feed blocks can be led directly to the animals' stable and in wet feeding the feed blocks are dissolved within short time.

### THE MEANS USED TO ACHIEVE THE SPECIAL EFFECT OF THE INVENTION:

This dissolution is achieved by a procedure of the kind mentioned initially and characterized by the fact that a digestible extruder-cooked feed shell surrounds an unheated mealy feed quantity forming a feed block with dimensions larger than 30x30x30mm with all the properties of the pelleting process known today.

### MODE OF OPERATION OF THE PROCEDURE:

In feed production, the feed is divided into an unheated mealy core product amounting to approx. 95% or the feed substance, and a shell product amounting to approx. 5% of the feed substance.

The core product is weighed, ground, mixed and conveyed to the core product feeder screw of the invention, which is feeding a compressing screw in which the core product is deaerateed and compressed so that density increases.

From the compressing screw the core product is pressed into a joint die, in which the core die part forms the core product to the desired shape and a feed stick is formed when the core product leaves the joint die.

The shell product is weighed, ground, mixed and led to the extruder-cooker feeder screw of the invention feeding an extruder cooker in which the shell product is extruder-cooked, so that the degree of gelatinization of starch is increased and the shell product becomes more digestible.

By extrusion the shell product is expanded, and a porous shell product is formed which is easy to shape and fortify well. From the extruder-cooker the shell product is pelleted in the joint die, where a shell die part forms the shell product to the desired shape surrounding the core product, when the shell product leaves the joint die.

The feed bar now formed consisting of the core product surrounded by the shell product passes a cutter which cuts the feed bar to adequate lengths and at the same is using the shell product to close the. The feed blocks thus formed are then by a belt conveyor led to a stamping roller burning company name, product name and other product related information into 3 of the feed block sides. The finished feed block is then conveyed to palletizing.

As approx. ca. 95% of the feed is unheated and does not require noticeable energy, the present production process results in energy savings of approx. 63% and CO₂ discharge reduction of approx. 59%.

### COMMENT TO CLAIM 2:

In a special execution the core product is fed vertically to the joint die and leaves the joint die vertically. The shell product is fed horizontally and leaves the joint die vertically.

The core product is shaped by a core die part the outer surface of which is part of the shell die part of the shell product.

The shell product is shaped by a shell die part, which together with the outer surface of the core die part is forming a die pipe around the core die part.

### COMMENT TO CLAIM 3:

In a special execution, the cutter cutting and closing of the feed block ends are combined in the same unit.

By means of a guide a set of cutting/shaping jaws is set into ratation, in which the cutting/shaping jaws parallelly and at the same speed as the feed bar is combining cutting and closing.

### COMMENT TO CLAIN 4:

In a special execution of the stamping roller, it is burning or stamping product information on 3 of the feed block surfaces by means of 3 rollers between which the feed blocks are led.

If the product information is burned into the feed block, the stamping rollers are heated either by a flame or by electricity.

The stamping roller is an independent unit, which can be placed arbitrarily on the belt conveyor after the cutter.

### COMMENT TO CLAIM 5:

In a special execution of the joint die, the core product is fed vertically to the joint die and leaves it horizontally, the shell product is fed vertically to the joint die and leaves it horizontally.

The core product is shaped by a core die part the outer surface of which is part of the shell product shell die part.

The shell product is formed by a shell die part, which together with the outer surface of the core die part forms a die pipe around the core die part.

### COMMENT TO CLAIM 6:

In a special execution feed blocks are formed with an cross section of approx. 100 x 70mm and a length of approx. 200 mm, onto which various product information is burned or imprinted.
The shell is 2-3mm thick.

The shape is especially well suited for palletizing which is the delivery form which is becoming usual.

### COMMENT TO CLAIM 7:

In a special execution form various shapes and sizes are formed differing from the shape mentioned under claim 6. Typically, such shapes will by cylindrical or cubic, but they may also have other customer related shapes, and may vary from small units, however larger than 30x30x30mm, to large units depending on the feeding form to be employed.

### COMMENT TO CLAIM 8:

In a special execution, the shell is formed around the core product by another process than the extruder-cooking process, or by combining the extruder-cooking process with another process.

### COMMENT TO CLAIM 9:

The core product can contain any type of feedstuffs or mixtures thereof of any mixing proportion, both liquid, pasty and powdery.

The process will especially be well suited for organic feed- stuffs, as the feed is not exposed to heating at high temperatures.

### COMMENT TO CLAIM 10:

The shell product can contain any kind of feedstuffs or mixtures thereof of all mixing proportions, both liquid, pasty and powdery, decisive is that the mixture can be extruder-cooked and form a hard shell.

### COMMENT TO CLAIM 11:

The core product can contain any kind of flavors and aromatics or mixtures thereof of any mixing proportion. Flavors and aromatics can enhance the feed acceptance of the animals.

As the core product is not heated, ingredients, which cannot stand heating, can be used, and there will be no loss of essential matters due to heating.

### COMMENT TO CLAIM 12:

The shell product can contain any kind of flavors and aromatics or mixtures thereof of any mixing proportions. Flavors and aromatics can enhance the feed acceptance of the animals.

### COMMENT TO CLAIM 13:

The core product can contain all kind of vitamins and minerals or mixtures thereof of any mixing proportions. As the core product is hot heated, ingredients, which cannot stand heating, can be used, and there will be no loss of essential matters due to heating.

### CMMENT TO CLAIM 14:

The core product can contain any kind of functional ingredients or mixtures thereof of any mixing proportion. As the core product is not heated, ingredients, which cannot stand heating, can be used, and many functional ingredients cannot withstand heating.

### COMMENT TO CLAIM 15:

The core product may contain any kind of pharmaceuticals or mixtures thereof of any mixing proportion. As the core product is not heated, ingredients, which cannot stand heating, can be used, and many pharmaceuticals cannot withstand heating.

### COMMENT TO CLAIM 16:

The core product can contain any kind of pH-reducing matters or mixtures thereof of any mixing proportion. The purpose of pH reducing is conservation of the feed.

### COMMENT TO 17:

The core product can contain any kind of additives, which can form chemical reaction with the feed mixture or mixtures thereof of any mixing proportion. In acid addition, which is often used in feed production, chemical reaction may happen after the feed blocks have been produced, while the feed is stored.

### COMMENT TO CLAIM 18:

The core product can contain animal or human skin enhancing additives.

### COMMENT TO CLAIM 19:

The core product can contain anti-inflammatory enhancing additives.

### COMMENT TO CLAIM 20:

The core product can contain anti-oxidant enhancing additives.

### COMMENT TO CLAIN 21:

The core product can contain respiration-enhancing additives.

### COMMENT TO CLAIM 22:

The core product can contain immune response enhancing additives.

### COMMENT TO CLAIM 23:

The core product can contain anti-parasite enhancing additives.

### COMMENT TO CLAIM 24:

The core product can contain pre-biotic or pro-biotic additives.

### COMMENT TO CLAIM 25:

The core product amounts to from 50% to 98% of the total weight of the feed block, which is the range where so large energy savings can be obtained that the prdduction process becomes economical.

### COMMENT TO CLAIM 26:

The procedure can be used as a packing process.

The procedure can especially be used for packing of vitamins and minerals or mixtures thereof. Today such mixtures are supplied in sacks and there are great problems with segregation.

### COMMENT TO CLAIM 27:

The procedure can also be used for production of instant food.

Especially as emergency rations in catastrophe situations instant feed can be mixed with the nutrients, vitamins and minerals required in the particular situation.

### LIST OF ILLUSTRATIONS:

- Fig. 1.0: shows a section through all the machinery components that are included in the procedure itemized from 1 to 8.
- Fig. 2.0: shows a section through the die (5).
- Fig. 3.0: shows two sections through the cutter (6).
- Fig. 4.0: shows a section through the cutter guides (6).
- Fig. 5.0: shows the stamping roll (7).

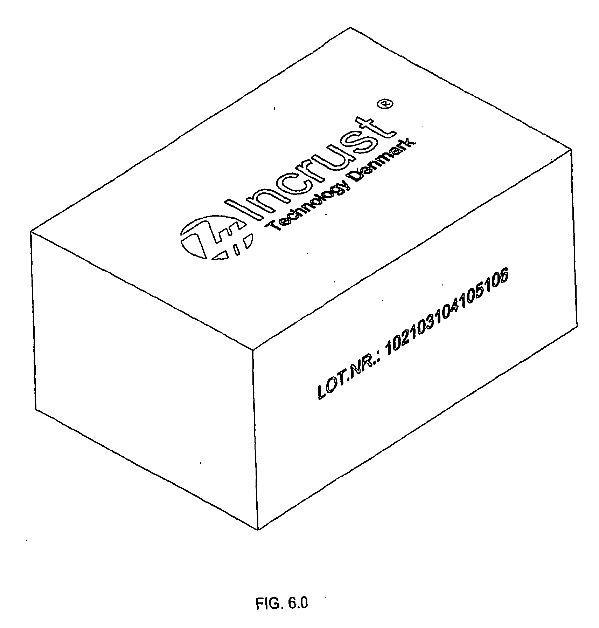

- Fig. 6.0: shows the shape of a finished product (8).
- Fig. 7.0: shows the functional diagram of a typical feed mill.
- Fig. 8.0: shows the functional diagram of a feed mill designed for the new procedure.

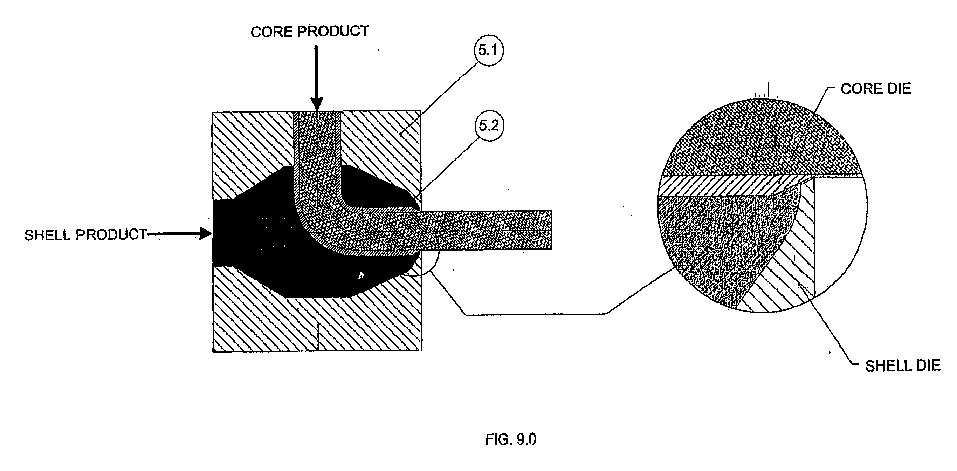

- Fig. 9.0: shows a section through the die (5) with an alternative design.

### DETAILED EXPLANATION OF WHAT IS SHOWN IN THE DRAWINGS:

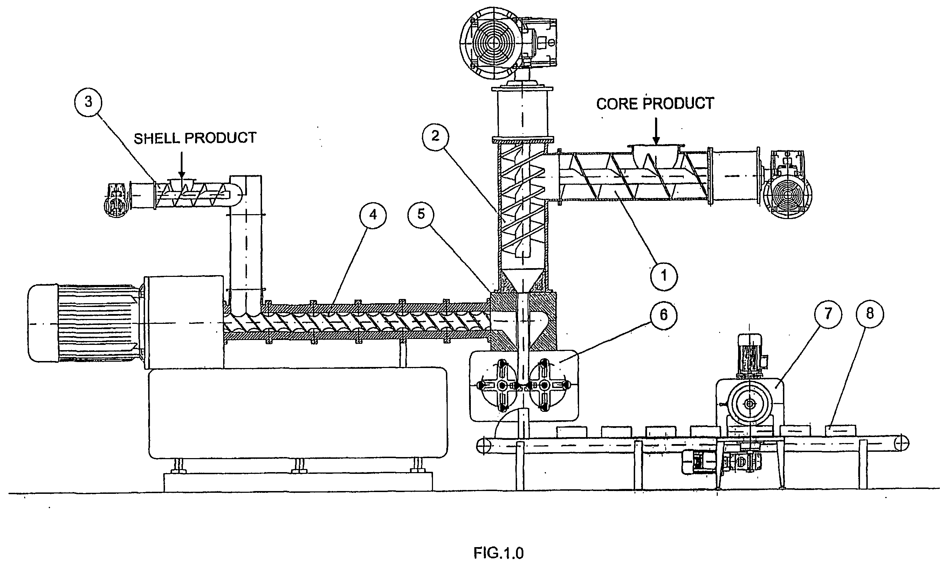

In fig. 1.0 is shown a section through all the machinery components included in the procedure of production feed encapsulated in digestible shell, when the core product is a compressed feed mixture.

The feeder screw (1) feeds the core product to the compressing screw (2). By metering the full load current of the compressing screw (2) the max. rpm. of the feeder screw (1) are determined and thus the max. load of the compressing screw (2).

The compressing screw (2) compresses the core product, often a feed meal with a density of approx. 0.5, to approximately double density. In the compressing screw (2) compression is obtained by designing the compressing screws 2) with reduced pitch towards the end outlet.

From the compressing screw (2) end outlet the core product is pressed into the joint die (5), where a core die part shapes the core product to the desired shape and where after it is emitted in the final shape from the joint die (5).

The feeder screw (3) feeds the shell product to the extruder-cooker (4). By metering the full load current of the extruder-cooker (4), the max. rpm. of the feeder screw (3) are determined and thus the max. load of the extruder-cooker (4).

The extruder-cooker (4) cooks the shell product, often finely ground wheat with a density of approx. 0.6, so that the degree of gelatinization of starch is increased and the shell product becomes more digestible. When the shell product leaves the joint die, expansion takes place resulting in a workable material of great strength.

In the extruder-cooker (4) cooking is achieved by designing the extruder-cooker (4) with reduced pitch and perhaps with opposite pitch and building of pressure towards the end outlet.

From the extruder-cooker (4) end outlet the shell product is pressed into the joint die (5), where a shell-die part forms the shell product to the desired shape which is emitted around the core product in the final shape from the joint die (5).

A feed bar consisting of a core product surrounded by the extruder cooked shell product is now emitted from the joint die (5) and is then led to a cutter (6) where the feed bar is cut to the desired length and simultaneously the ends are closed with the shell product.

The cut feed blocks are conveyed from the cutter to a stamping roll (7) where various production data and company name is burned or printed on the feed block shell. From the stamping roll (7) the finished feed blocks (8) are conveyed to palletizing.

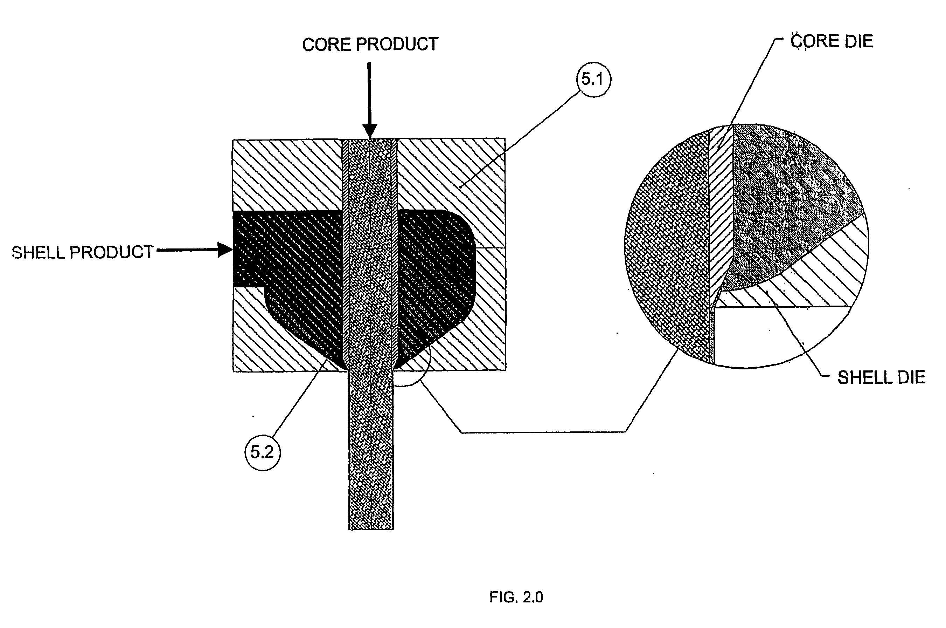

The joint die shown in Fig. 2.0 includes of a core die part (5.2) the job of which is to give the core product to the desired shape. Normally, the shape will be rectangular and approx. 100 x 70mm, yet other shapes and dimensions may also occur. The core product will normally have a temperature of room temperature (approx. 25° C), density will normally be approx. 1, yet other densities may also occur.

The core die part (5.2) is encircled by a shell die part (5.1) the job of which is to give the shell product the desired shape around the core product. Normally, the shape will be an approximately 2mm thick shell around the core product. The shell product will normally amount to approx. 5% of the total feed quantity. The shell product will normally have a temperature of approx. 90° C when the shell product leaves the shell die and is pressed around the core product. A subsequent expansion of the shell product resulting in evaporation is quickly lowering the temperature to approx. 40° C and the shell product forms a tough structure which hardens as the temperature drops further.

The shell product density will normally be approx. 0.35, yet other densities may also occur.

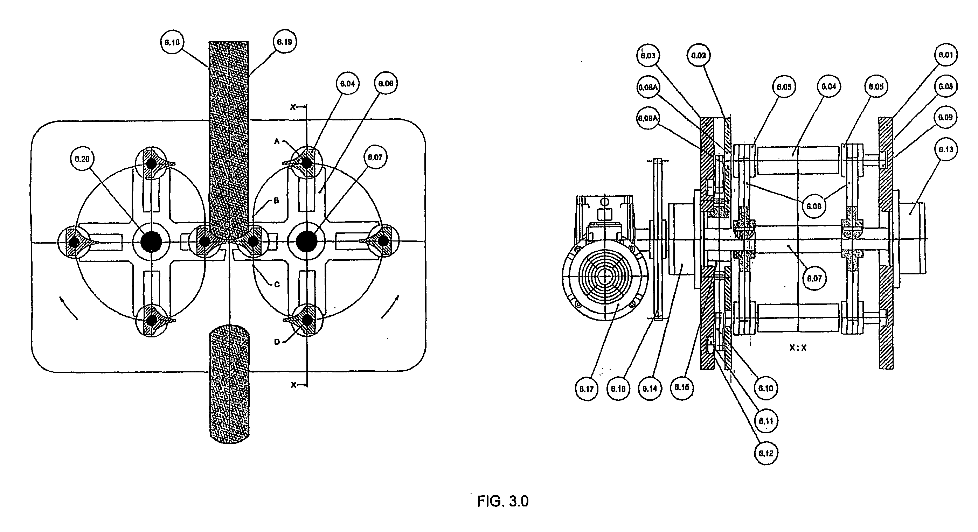

The cutter shown in Fig. 3.0 comprises a number of combined cutting/shaping jaws (6.04) which by means of guides (6.08) and (6.08A) is led round in a course A-B-C-D round a driving shaft (6.07) on which two driving arms (6.06) are fastened, driving the cutter/shaping jaws into the guide. The guides (6.08) and (6.08A) are formed in the guide plates (6.01) and (6.02). To increase the rest surface between the cutting/shaping jaws (6.04) and the driving arms (6.06) the cutting/shaping jaws (6.04) are reinforced by a rest increase (6.05). The cutting/shaping jaws (6.04) have guide rolls (6.09 and 6.09A) at either end. To keep the cutting/shaping jaws (6.04) parallel, with the pointed ends towards the feed stick (6.18) and (6.19), during the entire rotation, a jaw arm (6.10) is fastened to the cutting/shaping jaw (6.04). The jaw arm (6.10) has a guide roll (6.11), which is led into a guide (6.08) and (6.08A) one with a displaced guide (6.12) formed in the guide plate (6.03). The guide plates (6.03) and (6.02) are kept separate by a distance piece (6.15).

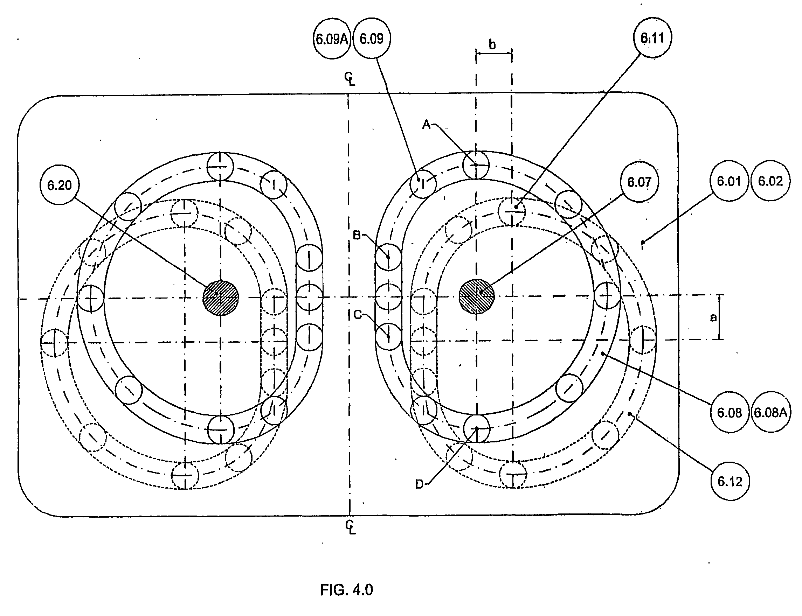

Fig. 4.0 shows the displacement a and b.

The driving shaft (6.07) is embedded in two bearings (6.13) and (6.14) and is driven by a geared motor (6.17).

A laterally reversed system to the one mentioned above is placed on the shaft (6.20) so that the cutting/shaping jaws work together and form the cutting/closing function.

The drive is transferred from shaft (6.07) to shaft 6.20 by a gear-wheel or chain transmission which take that the two jaw arrangements work together.

The rotation speed of the cutting/shaping jaws is so that the vertical speed of the speed vector is the same as the vertical speed of the feed sticks (6.18) and (6.19), thereby avoiding shredding the shell product (6.19) when the jaw arrangement is pressed together to cut and close the feed block.

The jaw movement is as follows:
From A to B the jaw bends the shell product towards the centre line of the feed stick (6.18). From B to C the jaws are pressed together and supports the closed feed stick (6.18) while a welding is going on. From C to D the jaws are quickly pulled away from the feed stick (6.18) and (6.19). From D to A the jaws are rotating at constant speed. The circular arc movement from one jaw to the next determines the length of the feed block.

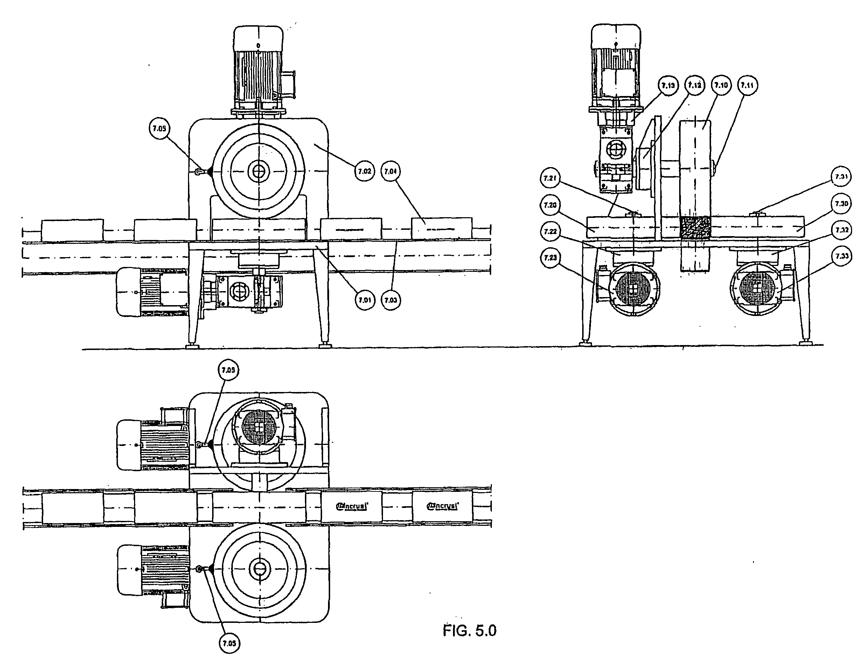

Fig. 5.0 shows the stamping roll that can be used to burn or print company name and product information on the finished feed.

The stamping roll is supplied with three printing rolls (7.10), (7.20) and (7.30) on which the information to be transferred to the finished feed block is engraved (7.04). If the information is to be transferred by being burned into the shell product, the rolls are heated continuously with a flame or by electrical heating (7.05).

The advantage of this functional design is that the information is applied continuously.

The stamping rolls are fastened to two bracket plates (7.01) and (7.02). The vertical roll (7.10) is fastened to shaft (7.11) and is fastened to the bracket plate (7.02) by a bearing (7.12). A position geared motor (7.13) is driving the roll. The horizontal roll (7.20) is fastened to shaft (7.21) and is fastened to a bracket plate (7.19) by a bearing (7.22). A position geared motor (7.23) is driving the roll. The horizontal shaft (7.30) is fastened to shaft (7.31) and is fastened to a bracket plate (7.01) by a bearing (7.32). A position geared motor (7.33) is driving the roll.

The conveyor belt (7.03) driving the feed blocks passed the stamping rolls has the same speed as the horizontal vector speed of the stamping rolls. The desired information is now applied to the finished feed block (7.04) proceeding on the conveyor belt (7.03) to palletizing.

To place the print accurately on the feed blocks, the stamping rolls (7.10), (7.20) and (7.30) are moved forward to a certain position, and rotation is not started until the unprinted feed block has reached the right position in relation to the stamping rolls.

An alternative to heating of the printing rolls may be to apply a digestible colouring.

## Claims

1. Procedure for production of an animal feed comprising a core product encapsulated in a digestible shell, which procedure comprises the steps of:
a) feeding a core product through a feeder screw into a compressing screw; deaerating the core product in the compressing screw and pressing it through a joint die; shaping the core product into the desired shape;
b) feeding a shell material through a feeder screw into an extruder-cooker and extruder-cooking the shell product; pressing the extruder-cooked shell product into the joint die; shaping the extruder-cooked shell product around the core product.
c) cutting the feed bar consisting of the core product surrounded by the extruder-cooked shell into feed blocks of suitable length by using a cutter, and simultaneously closing the ends of the feed blocks with shell product;
**characterized in that** the core product is an unheated mealy feed mixture amounting to between 70% and 95% of the total animal feed.

2. Procedure according to claim 1, **characterized in** burning or printing product information directly on up to three feed block sides by using stamping rolls.

3. Procedure according to claim 1, **characterized in that** the feed blocks have dimensions larger than 30x30x30mm.

4. Procedure according to claim 1 **characterized in** combining the shaping of the core product by a core die part and the shaping of the shell product by a shell die part in the same joint die.

5. Procedure according to claim 1, **characterized in that** the shell product exits the joint die perpendicularly to the entry of the shell product to the die and that the core product exits the joint die in continuation of the entry of the core product to the die.

6. Procedure according to claim 1, **characterized in** providing the cutter with a design to combine cutting and closing of feed block ends and in establishing the vertical speed vector of the cutter/closing jaws which is the same as the vertical speed vector of the feed sticks.

7. Procedure according to claim 1, **characterized in** providing a stamping roll with a design so that product information is continuously burned or imprinted on up to three surface of the feed blocks by means of rolls.

8. Procedure according to claim 1, **characterized in** combining the shaping of the core product by a core die part and shaping of the shell product by a shell die part in the same die.

9. Procedure according to claim 1, **characterized in that** the shell product exits the joint die in the same direction as it enters the die and that the core product exits the joint die perpendicularly to its entry to the die.

10. Procedure according to claim 1, **characterized in that** the finished product is designed as feed blocks where product information is burned or imprinted directly on the feed block sides.

11. Procedure according to claim 1, **characterized in** forming the shell by a combination of extruder-cooking and another process.

12. Procedure according to claim 1, **characterized in** providing all kinds of feedstuffs or mixtures thereof of any mixing proportion as the core product.

13. Procedure according to claim 1, **characterized in** providing any type of feedstuffs or mixtures thereof of any mixing proportion as the shell product.

14. Procedure according to claim 1, **characterized in** providing any kind of flavor and aromatic additives or mixtures thereof of any mixing proportion as the core product.

15. Procedure according to claim 1, **characterized in** providing any kind of flavor and aromatic additives or mixtures thereof of any mixing proportion as the shell product.

16. Procedure according to claim 1, **characterized in** providing any kind of vitamins and minerals or mixtures thereof of any mixing proportion as the core product.

17. Procedure according to claim 1, **characterized in** providing any functional additive or mixtures thereof of any mixing proportion as the core product.

18. Procedure according to claim 1, **characterized in** providing any pharmaceutical additive or mixtures thereof of any mixing proportion as the core product.

19. Procedure according to claim 1, **characterized in** providing any kind of pH-reducing additive or mixtures thereof of any mixing proportion as the core product.

20. Procedure according to claim 1, **characterized in** providing any kind of additive which can form a chemical reaction with the feed mixture or mixtures thereof in any mixing proportion as the core product.

21. Procedure according to claim 1, **characterized in** providing at least one animal or human skin improving additive as the core product.

22. Procedure according to claim 1, **characterized in** providing at least anti-inflammatory enhancing additive as the core product.

23. Procedure according to claim 1, **characterized in** providing at least one antioxidant enhancing additive as the core product.

24. Procedure according to claim 1, **characterized in** providing at least one respiration enhancing additive as the core product.

25. Procedure according to claim 1, **characterized in** providing at least one immune response enhancing additive as the core product.

26. Procedure according, to claim 1, **characterized in** providing at least one anti-parasite enhancing additive as the core product.

27. Procedure according to claim 1, **characterized in** providing at least one pre-biotic or one pro-biotic additive as the core product.

28. Procedure according to claim 1, **characterized in** providing the core product as from 50% to 98% of the total weight of the feed block.

29. Procedure according to claim 1, **characterized in** using the feed block shell as wrapping for transport of feed concentrates, vitamins, minerals, nutrient additives, functional additives and mixtures thereof.

30. Use of a procedure according to claim 1 for production of human food.

## Patentansprüche

1. Verfahren für die Herstellung von Tierfutter, das ein in einer verdaubaren Schale eingekapseltes Kernprodukt enthält, wobei das Verfahren die folgenden Schritte umfasst:
a) Zuführen eines Kernprodukts durch eine Förderschraube in eine Verdichtungsschraube; Austreiben der Luft aus dem Kernprodukt in der Verdichtungsschraube und Pressen des Kernprodukts durch eine Verbindungsdüse; Formen des Kernprodukts in die gewünschte Form;
b) Zuführen eines Schalenmaterials durch eine Förderschraube in eine Strangpress-/Koch-Einrichtung und Strangpressen/Kochen des Schalenprodukts; Pressen des stranggepressten/gekochten Schalenprodukts in die Verbindungsdüse; Formen des stranggepressten/gekochten Schalenprodukts um das Kernprodukt;
c) Schneiden der Futterstange, die aus dem von der stranggepressten/gekochten Schale umgebenen Kernprodukt besteht, in Futterblöcke geeigneter Länge unter Verwendung einer Schneideinrichtung und gleichzeitig Verschließen der Enden der Futterblöcke mit dem Schalenprodukt;
**dadurch gekennzeichnet, dass** das Kernprodukt ein nicht erwärmtes, pulverartiges Futtergemisch ist, dessen Anteil im Bereich von 70% bis 95 % des gesamten Tierfutters liegt.

2. Verfahren nach Anspruch 1, **dadurch gekennzeichnet, dass** Produktinformationen unter Verwendung von Prägewalzen direkt auf drei Futterblockseiten gebrannt oder gedruckt werden.

3. Verfahren nach Anspruch 1, **dadurch gekennzeichnet, dass** die Futterblöcke Abmessungen haben, die größer als 30 × 30 × 30 mm sind.

4. Verfahren nach Anspruch 1, **dadurch gekennzeichnet, dass** die Formung des Kernprodukts durch einen Kerndüsenabschnitt und die Formung des Schalenprodukts durch einen Schalendüsenabschnitt in derselben Verbindungsdüse kombiniert sind.

5. Verfahren nach Anspruch 1, **dadurch gekennzeichnet, dass** das Schalenprodukt die Verbindungsdüse senkrecht zum Eintritt des Schalenprodukts in die Düse verlässt und dass das Kernprodukt die Verbindungsdüse in der gleichen Richtung verlässt, in der es in die Düse eintritt.

6. Verfahren nach Anspruch 1, **dadurch gekennzeichnet, dass** die Schneideinrichtung einen Entwurf hat, um das Schneiden und Verschließen von Futterblockenden zu kombinieren und um einen vertikalen Geschwindigkeitsvektor der Schneideinrichtungs-/Verschließ-Klauen zu schaffen, der gleich dem vertikalen Geschwindigkeitsvektor der Futterstangen ist.

7. Verfahren nach Anspruch 1, **dadurch gekennzeichnet, dass** eine Prägewalze einen Entwurf hat, derart, dass Produktinformationen mittels Walzen kontinuierlich auf drei Oberflächen der Futterblöcke gebrannt oder gedruckt werden.

8. Verfahren nach Anspruch 1, **dadurch gekennzeichnet, dass** die Formung des Kernprodukts durch einen Kerndüsenabschnitt und die Formung des Schalenprodukts durch einen Schalendüsenabschnitt in derselben Düse kombiniert sind.

9. Verfahren nach Anspruch 1, **dadurch gekennzeichnet, dass** das Schalenprodukt die Verbindungsdüse in der gleichen Richtung, in der es in die Düse eintritt, verlässt und dass das Kernprodukt die Verbindungsdüse senkrecht zu der Richtung verlässt, in der es in die Düse eintritt.

10. Verfahren nach Anspruch 1, **dadurch gekennzeichnet, dass** das fertig gestellte Produkt die Form von Futterblöcken hat, bei denen Produktinformationen direkt auf die Futterblockseiten gebrannt oder gedruckt sind.

11. Verfahren nach Anspruch 1, **dadurch gekennzeichnet, dass** die Schale durch eine Kombination aus Strangpressen/Kochen und aus einem weiteren Prozess gebildet wird.

12. Verfahren nach Anspruch 1, **dadurch gekennzeichnet, dass** als Schalenprodukt alle Arten von Futterrohstoffen oder Gemischen hiervon in jedem beliebigen Mischungsverhältnis vorgesehen sind.

13. Verfahren nach Anspruch 1, **dadurch gekennzeichnet, dass** als Schalenprodukt irgendwelche Typen von Futterrohstoffen oder Gemischen hiervon in jedem beliebigen Mischungsverhältnis vorgesehen sind.

14. Verfahren nach Anspruch 1, **dadurch gekennzeichnet, dass** als Kernprodukt irgendwelche Arten von Geschmacks- und Aromaadditiven oder Gemischen hiervon in jedem beliebigen Mischungsverhältnis vorgesehen sind.

15. Verfahren nach Anspruch 1, **dadurch gekennzeichnet, dass** als Schalenprodukt irgendwelche Arten von Geschmacks- und Aromaadditiven oder Gemischen hiervon in jedem beliebigen Mischungsverhältnis vorgesehen sind.

16. Verfahren nach Anspruch 1, **dadurch gekennzeichnet, dass** als Kernprodukt irgendwelche Arten von Vitaminen und Mineralstoffen oder Gemischen hiervon in jedem beliebigen Mischungsverhältnis vorgesehen sind.

17. Verfahren nach Anspruch 1, **dadurch gekennzeichnet, dass** als Kernprodukt irgendwelche funktionalen Additive oder Gemische hiervon in jedem beliebigen Mischungsverhältnis vorgesehen sind.

18. Verfahren nach Anspruch 1, **dadurch gekennzeichnet, dass** als Kernprodukt irgendwelche pharmazeutischen Additive oder Gemische hiervon in jedem beliebigen Mischungsverhältnis vorgesehen sind.

19. Verfahren nach Anspruch 1, **dadurch gekennzeichnet, dass** als Kernprodukt irgendwelche Arten von pH-reduzierenden Additiven oder Gemischen hiervon in jedem beliebigen Mischungsverhältnis vorgesehen sind.

20. Verfahren nach Anspruch 1, **dadurch gekennzeichnet, dass** irgendwelche Arten von Additiven, die eine chemische Reaktion mit dem Futtergemisch bilden können, oder Gemische hiervon in jedem beliebigen Mischungsverhältnis als Kernprodukt vorgesehen sind.

21. Verfahren nach Anspruch 1, **dadurch gekennzeichnet, dass** als Kernprodukt wenigstens ein Additiv zur Verbesserung der tierischen oder der menschlichen Haut vorgesehen ist.

22. Verfahren nach Anspruch 1, **dadurch gekennzeichnet, dass** als Kernprodukt wenigstens ein die Schwerentflammbarkeit erhöhendes Additiv vorgesehen ist.

23. Verfahren nach Anspruch 1, **dadurch gekennzeichnet, dass** als Kernprodukt wenigstens ein Oxidationsunterdrückungs-Verbesserungsadditiv vorgesehen ist.

24. Verfahren nach Anspruch 1, **dadurch gekennzeichnet, dass** als Kernprodukt wenigstens ein atmungsverbesserndes Additiv vorgesehen ist.

25. Verfahren nach Anspruch 1, **dadurch gekennzeichnet, dass** als Kernprodukt wenigstens ein Immunabwehr-Verbesserungsadditiv vorgesehen ist.

26. Verfahren nach Anspruch 1, **dadurch gekennzeichnet, dass** als Kernprodukt wenigstens ein Parasitenunterdrückungs-Verbesserungsadditiv vorgesehen ist.

27. Verfahren nach Anspruch 1, **dadurch gekennzeichnet, dass** als Kernprodukt wenigstens ein präbiotisches oder probiotisches Additiv vorgesehen ist.

28. Verfahren nach Anspruch 1, **dadurch gekennzeichnet, dass** das Kernprodukt ein Gewicht im Bereich von 50 % bis 98 % des Gesamtgewichts des Futterblocks besitzt.

29. Verfahren nach Anspruch 1, **dadurch gekennzeichnet, dass** die Futterblockschale als Umhüllung für den Transport von Futterkonzentraten, Vitaminen, Mineralstoffen, Nährstoffadditiven, funktionalen Additiven und Gemischen hiervon verwendet wird.

30. Verwendung eines Verfahrens nach Anspruch 1 für die Herstellung von menschlicher Nahrung.

## Revendications

1. Procédé pour la fabrication d'un aliment pour animaux comprenant un produit formant noyau encapsulé dans une coque digestible, ledit procédé comprenant les étapes consistant à :
a) charger un produit formant noyau à l'aide d'une vis d'alimentation dans une vis de pression ; désaérer le produit formant noyau dans la vis de pression et compresser celui-ci à travers une matrice commune ; former le produit formant noyau en la forme souhaitée ;
b) charger un matériau formant coque par l'intermédiaire d'une vis d'alimentation dans un extrudeur-cuiseur et extruder-cuire le produit formant coque ; comprimer le produit formant coque extrudé-cuit dans la matrice commune ; former le produit formant coque extrudé-cuit autour du produit formant noyau ;
c) découper la barre d'aliments constituée par le produit formant noyau entouré par la coque extrudée-cuite en blocs d'aliments de longueur adaptée en utilisant une coupeuse et simultanément, fermer les extrémités des blocs d'aliments avec le produit formant coque ;
**caractérisé en ce que** le produit formant noyau est un mélange d'aliments farineux non chauffés représentant entre 70 % et 95 % des aliments pour animaux totaux.

2. Procédé selon la revendication 1, **caractérisé par** la gravure ou l'impression d'informations de produit directement sur jusqu'à trois côtés des blocs d'aliments en utilisant des rouleaux d'estampage.

3. Procédé selon la revendication 1, **caractérisé en ce que** les blocs d'aliments ont des dimensions supérieures à 30 x 30 x 30 mm.

4. Procédé selon la revendication 1 **caractérisé par** la combinaison de la formation du produit formant noyau par une partie de matrice de noyau et la formation du produit formant coque par une partie de matrice de coque dans la même matrice commune.

5. Procédé selon la revendication 1, **caractérisé en ce que** le produit formant coque sort de la matrice commune perpendiculairement à l'entrée du produit formant coque dans la matrice et **en ce que** le produit formant noyau sort de la matrice commune dans le prolongement de l'entrée du produit formant noyau dans la matrice.

6. Procédé selon la revendication 1, **caractérisé en ce que** la coupeuse est pourvue d'une conception combinant la découpe et la fermeture des extrémités des blocs d'aliments et par l'établissement d'un vecteur de vitesse vertical des mâchoires de coupe/fermeture qui est le même que le vecteur de vitesse vertical des baguettes d'aliments.

7. Procédé selon la revendication 1, **caractérisé en ce que** le rouleau d'estampage est pourvu d'une conception telle que les informations de produit sont gravées ou imprimées en continu sur jusqu'à trois surfaces des blocs d'aliments au moyen de rouleaux.

8. Procédé selon la revendication 1, **caractérisé par** la combinaison de la formation du produit formant noyau par une partie de matrice de noyau et la formation du produit formant coque par une partie de matrice de coque dans la même matrice.

9. Procédé selon la revendication 1, **caractérisé en ce que** le produit formant coque sort de la matrice commune dans la même direction que son entrée dans la matrice et que le produit formant noyau sort de la matrice commune perpendiculairement à son entrée dans la matrice.

10. Procédé selon la revendication 1, **caractérisé en ce que** le produit fini est conçu sous forme de blocs d'aliments sur lesquels des informations de produit sont gravées ou imprimées directement sur les côtés des blocs d'aliments.

11. Procédé selon la revendication 1, **caractérisé par** la formation de la coque par une combinaison d'extrusion-cuisson et d'un autre processus.

12. Procédé selon la revendication 1, **caractérisé par** la fourniture d'un type quelconque de produits alimentaires ou de mélanges de ceux-ci en proportions de mélange quelconques en tant que produit formant noyau.

13. Procédé selon la revendication 1, **caractérisé par** la fourniture d'un type quelconque de produits alimentaires ou de mélanges de ceux-ci en proportions de mélange quelconques en tant que produit formant coque.

14. Procédé selon la revendication 1, **caractérisé par** la fourniture d'un type quelconque d'arome ou d'additifs aromatiques ou de mélanges de ceux-ci en une proportion de mélange quelconque en tant que produit formant noyau.

15. Procédé selon la revendication 1, **caractérisé par** la fourniture d'un type quelconque d'arome ou d'additifs aromatiques ou de mélanges de ceux-ci en une proportion de mélange quelconque en tant que produit formant coque.

16. Procédé selon la revendication 1, **caractérisé par** la fourniture d'un type quelconque de vitamines et de minéraux ou de mélanges de ceux-ci en une proportion de mélange quelconque en tant que produit formant noyau.

17. Procédé selon la revendication 1, **caractérisé par** la fourniture d'un additif fonctionnel quelconque ou de mélanges de ceux-ci en une proportion de mélange quelconque en tant que produit formant noyau.

18. Procédé selon la revendication 1, **caractérisé par** la fourniture d'un additif pharmaceutique quelconque ou de mélanges de ceux-ci en une proportion de mélange quelconque en tant que produit formant noyau.

19. Procédé selon la revendication 1, **caractérisé par** la fourniture d'un type quelconque d'additif réducteur de pH ou de mélanges de ceux-ci en une proportion de mélange quelconque en tant que produit formant noyau.

20. Procédé selon la revendication 1, **caractérisé par** la fourniture d'un type quelconque d'additif qui peut former une réaction chimique avec le mélange d'aliments ou de mélanges de ceux-ci en une proportion de mélange quelconque en tant que produit formant noyau.

21. Procédé selon la revendication 1, **caractérisé par** la fourniture d'au moins un additif de soin de la peau animale ou humaine en tant que produit formant noyau.

22. Procédé selon la revendication 1, **caractérisé par** la fourniture d'au moins un additif de traitement anti-inflammatoire en tant que produit formant noyau.

23. Procédé selon la revendication 1, **caractérisé par** la fourniture d'au moins un additif de traitement antioxydant en tant que produit formant noyau.

24. Procédé selon la revendication 1, **caractérisé par** la fourniture d'au moins un additif stimulant la respiration en tant que produit formant noyau.

25. Procédé selon la revendication 1, **caractérisé par** la fourniture d'au moins un additif stimulant la réponse immunitaire en tant que produit formant noyau.

26. Procédé selon la revendication 1, **caractérisé par** la fourniture d'au moins un additif de traitement antiparasitaire en tant que produit formant noyau.

27. Procédé selon la revendication 1, **caractérisé par** la fourniture d'au moins un additif probiotique en tant que produit formant noyau.

28. Procédé selon la revendication 1, **caractérisé par** la fourniture du produit formant noyau en tant que 50 % à 98 % du poids total du bloc d'aliments.

29. Procédé selon la revendication 1, **caractérisé par** l'utilisation de la coque de bloc d'aliments en tant qu'emballage pour le transport d'aliments concentrés, de vitamines, de minéraux, d'additifs nutritionnels, d'additifs fonctionnels et de mélanges de ceux-ci.

30. Utilisation d'un procédé selon la revendication 1 pour la production d'aliments pour humains.
